# EUROPÄISCHE PATENTSCHRIFT

(11) **EP 3 759 660 B1**
(45) Veröffentlichungstag und Bekanntmachung des Hinweises auf die Patenterteilung: **12.04.2023**
(21) Anmeldenummer: 19703670.0
(22) Anmeldetag: 04.02.2019
(51) Int. Cl.: G06Q 10/00, G06Q 10/06, G06Q 50/28, H04W 4/38, H04W 4/02

(54) **VORRICHTUNG, INSBESONDERE HANDWERKZEUGMASCHINEN-VERWALTUNGSVORRICHTUNG, UND VERFAHREN ZUR ÜBERWACHUNG UND/ODER ZUR VERWALTUNG EINER VIELZAHL VON GEGENSTÄNDEN**
DEVICE, PARTICULARLY A HAND-HELD POWER TOOL MANAGEMENT DEVICE AND METHOD FOR MONITORING AND/OR MANAGING A PLURALITY OF OBJECTS
DISPOSITIF, EN PARTICULIER DISPOSITIF DE GESTION DE MACHINES-OUTILS PORTATIVES, ET PROCÉDÉ DE SURVEILLANCE ET/OU DE GESTION D'UNE PLURALITÉ D'OBJETS

(30) Priorität: 02.03.2018 DE 102018203179
(43) Veröffentlichungstag der Anmeldung: 06.01.2021
(73) Patentinhaber: Robert Bosch GmbH, 70442 Stuttgart (DE)
(72) Erfinder: SCHADOW, Joachim, 70563 Stuttgart (DE); ESENWEIN, Florian, 70771 Leinfelden-Echterdingen (DE); STOCK, Joern, 70711 Leinfelden-Echterdingen (DE)
(86) Internationale Anmeldenummer: PCT/EP2019/052599
(87) Internationale Veröffentlichungsnummer: WO 2019/166185

(56) Entgegenhaltungen:
- DE-A1-102007 035 095
- DE-A1-102014 225 332
- DE-A1-102015 219 933
- US-A1- 2010 268 409
- US-A1- 2015 063 159
- US-A1- 2016 378 585

## Beschreibung

### Stand der Technik

In der US 2015/063159 A1 und der US 2010/268409 A1 sind bereits Verwaltungsvorrichtungen zur Überwachung und/oder zur Verwaltung einer Vielzahl von Gegenständen vorgeschlagen worden, die jeweils eine Kommunikationseinheit zur Kommunikation mit den Gegenständen und eine Recheneinheit zur Verarbeitung von mittels der Kommunikationseinheit empfangenen elektronischen Daten aufweisen. Aus der DE 10 2007 035095 A1 geht ferner hervor, dass Handwerkzeugmaschinen von einer Recheneinheit über ein Kommunikationsnetz unter anderem in Bezug auf den Ladezustand ihres Akkus überwacht und verwaltet werden können.

### Offenbarung der Erfindung

Die Erfindung geht aus von einer Verwaltungsvorrichtung zur Überwachung und/oder zur Verwaltung einer Vielzahl von Handwerkzeugmaschinen und/oder Zubehör für Handwerkzeugmaschinen umfassenden Gegenständen. Die Verwaltungsvorrichtung umfasst dazu eine Kommunikationseinheit zur Kommunikation mit den Gegenständen und eine Recheneinheit zur Verarbeitung von mittels der Kommunikationseinheit empfangenen elektronischen Daten, wobei die Recheneinheit in Abhängigkeit von Schwarminformationen eines Schwarms, der die Gegenstände umfasst, Befehle an zumindest einen der Gegenstände des Schwarms ausgibt.

Es wird vorgeschlagen, dass die Recheneinheit ein Energieüberwachungsmodul aufweist, welches dazu vorgesehen ist, zumindest einen der Befehle in Abhängigkeit von einem Energiezustand des Schwarms und/oder einem Energiezustand zumindest eines Gegenstand des Schwarms vor einer Ausgabe durch die Recheneinheit derart zu modifizieren, dass bei einem Empfang durch die Kommunikationseinheit des zumindest einen Gegenstands ein Energiesparmodus und/oder ein Betrieb mit reduziertem Energieverbrauch einer bestimmten Funktion des zumindest einen Gegenstands angesteuert wird und/oder ein zeitlicher Abstand von aufeinanderfolgenden, an den zumindest einen Gegenstand gerichteten Befehlen abhängig von dem Energiezustand beeinflusst wird und/oder bei einem Vorhandensein mehrerer Gegenstände eine Ansteuerung der Gegenstände des Schwarms bevorzugt wird, welche den höchsten Ladezustand aufweisen. Dadurch kann vorteilhaft eine Schwarmintelligenz zu einer energieoptimierten Überwachung und/oder zur Verwaltung einer Vielzahl von Gegenständen genutzt werden. Vorteilhaft kann dadurch ein Energieverbrauch und/oder eine Energieausnutzung einer insgesamt den Gegenständen des Schwarms zur Verfügung stehenden Energie verbessert werden. Zudem kann dadurch vorteilhaft eine Gesamteinsatzdauer der Gegenstände des Schwarms, insbesondere bei einem beschränkten Energieangebot, optimiert werden. Das Energieüberwachungsmodul ist insbesondere zumindest teilweise einstückig mit der Recheneinheit ausgebildet oder bildet insbesondere ein von der Recheneinheit separates Rechengerät, insbesondere mit separater Prozessoreinheit und/oder Speichereinheit, aus. Insbesondere ist das Energieüberwachungsmodul dazu vorgesehen, Daten über Energiezustände von Gegenständen und/oder von Gegenständen zugeordneten Sensoren zu sammeln und/oder zu verarbeiten. Unter einem Energiezustand" soll insbesondere ein Ladezustand eines Energiespeichers, insbesondere einer Batterie, welche den Gegenstand und/oder den Sensor mit elektrischer Energie versorgt, verstanden werden. Vorzugsweise erfolgt eine Abfrage des Energie-überwachungsmoduls vor jedem Versenden eines Befehls mittels des zentralen Kommunikationsmoduls der Recheneinheit.

Zudem kann vorteilhaft, insbesondere mittels der Informationsausgabe an einen Bediener, eine Arbeitserleichterung und/oder Arbeitsunterstützung eines Bedieners zumindest eines der Gegenstände ermöglicht werden, beispielsweise indem eine Unterstützung bei einer Bestückung eines Sets von Gegenständen, insbesondere abhängig von Energieanforderungen und/oder Werkzeuganforderungen einer Aufgabe und/oder eines Arbeitsschritts, erfolgt. Dazu könnte beispielsweise mittels Schwarmintelligenz auf Basis einer erkannten Teilzusammensetzung eines Sets von Gegenständen eine mögliche Aufgabe und/oder ein mögliches Einsatzgebiet des Sets erkannt werden und daraufhin möglicherweise noch fehlende und/oder die Teilzusammensetzung möglicherweise komplettierende Gegenstände dem Bediener, insbesondere optisch und/oder akustisch, angezeigt werden. Beispielsweise könnte die Verwaltungsvorrichtung vorteilhaft erkennen, dass ein Bediener plant, Abrissarbeiten zu verrichten, da er einen Abbruchhammer und eine Schlagbohrmaschine mit entsprechenden Aufsätzen an einen gemeinsamen Ort, beispielsweise ein Auto, bewegt, woraufhin die Verwaltungsvorrichtung dem Bediener die Information anzeigt, dass er beispielsweise noch einen Helm, einen Gehörschutz oder eine Motorsäge einpacken sollte. Es ist zudem beispielsweise denkbar, dass die Verwaltungsvorrichtung Arbeitsschritte von Gegenständen des Schwarms registriert und aufgrund vorangegangener Arbeitsschritte, insbesondere mittels Schwarminformationen, selbstständig erkennt, welche/r Gegenstände/Gegenstand demnächst in welchem/welchen Betriebsmodus/Betriebsmodi eingesetzt wird/werden und dementsprechende Befehle zu einer Anpassung einer Werkzeugvoreinstellung ausgibt. Beispielsweise könnte nach einer Benutzung einer Betonsäge automatisch eine Voreinstellung einer Schlagfunktion eines Schlagbohrhammers zur Bearbeitung von Betonoberflächen vorgenommen werden.

Die Kommunikationseinheit ist insbesondere als eine drahtlose Kommunikationseinheit ausgebildet. Die Kommunikationseinheit umfasst insbesondere zumindest ein Kommunikationsmodul, welches insbesondere dazu vorgesehen ist, Daten zu versenden und/oder zu empfangen. Insbesondere ist zumindest jedem der Gegenstände des Schwarms und/oder der Recheneinheit zumindest ein Kommunikationsmodul zugeordnet. Insbesondere bildet das Kommunikationsmodul der Recheneinheit ein zentrales Kommunikationsmodul aus. Insbesondere ist das, insbesondere zentrale, Kommunikationsmodul der Recheneinheit dazu vorgesehen, eine Kommunikation mit und/oder zwischen den Gegenständen des Schwarms zentral zu verwalten und/oder zu steuern. Das Kommunikationsmodul ist insbesondere dazu vorgesehen, mittels WLAN, Bluetooth, WiMAX, NFC, RFID, ZigBee, Wibree, ANT, Z-Wave, Enocean, UMTS, LTE und/oder eines vergleichbaren Übertragungsstandards für Datenfunk zu kommunizieren. Alternativ oder zusätzlich könnte das Kommunikationsmodul eine Infrarot-Schnittstelle umfassen. Es ist insbesondere denkbar, dass das Kommunikationsmodul eine Kommunikation mittels einer Mehrzahl an Übertragungsstandards ermöglicht. Die Gegenstände können Handwerkzeugmaschinen, Zubehör für Handwerkzeugmaschinen, weitere Werkzeuge, insbesondere auch ohne elektrischen Antrieb, und/oder Schutzausrüstungen für einen Bediener umfassen. Insbesondere ist zumindest ein Gegenstand der Gegenstände des Schwarms als eine Handwerkzeugmaschine ausgebildet. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Eine "Schwarminformation" soll insbesondere zumindest als eine Information und/oder ein Datensatz verstanden werden, welche/r aus einer Zusammenschau und/oder Verarbeitung einer Mehrzahl an Einzeldaten einzelner Gegenstände, insbesondere einzelnen Gegenständen zugeordneter Sensoren, vorzugsweise durch die Recheneinheit, gewonnen wurde. Unter einem "Schwarm" soll insbesondere eine Gruppe von Gegenständen verstanden werden, welche insbesondere in einer wechselseitigen Beziehung miteinander stehen und/oder einen zusammengehörigen Verband bilden. Unter einer "Recheneinheit" soll insbesondere eine Einheit mit einem Informationseingang, einer Informationsverarbeitung und einer Informationsausgabe verstanden werden. Vorteilhaft weist die Recheneinheit zumindest einen Prozessor, einen Speicher, Ein- und Ausgabemittel, weitere elektrische Bauteile, ein Betriebsprogramm, Regelroutinen, Steuerroutinen und/oder Berechnungsroutinen auf. Es ist vorstellbar, dass die Recheneinheit zur Berechnung der Schwarminformation mit intelligenten, vorzugsweise selbstlernenden, Algorithmen ausgestattet ist. Dadurch kann vorteilhaft eine konstante Verbesserung der Befehle und/oder ausgegebenen Informationen der Recheneinheit erreicht werden. Unter einem "Befehl" soll insbesondere eine Handlungsanweisung verstanden werden, welche vorzugsweise dazu vorgesehen ist, bei einem Empfang durch das Kommunikationsmodul eines Gegenstands zumindest eine Statusänderung zumindest des Gegenstands zu bewirken. Insbesondere kann ein Befehl einem einzelnen Befehlsempfänger, insbesondere Gegenstand, zugewiesen sein oder einer Mehrzahl an Befehlsempfängern, welche den Befehl insbesondere identisch oder auf unterschiedliche Weise interpretieren können. Eine Ausgabe einer Information kann insbesondere optisch, beispielsweise über ein Farbsignal und/oder eine Anzeige auf einem Bildschirm, akustisch und/oder über eine Bewegung, beispielsweise eine Vibration, erfolgen.

Ferner wird vorgeschlagen, dass die Recheneinheit ein Schwarmbildungsmodul aufweist, welches dazu vorgesehen ist, dem Schwarm Gegenstände aufgrund der empfangenen elektronischen Daten, insbesondere in Abhängigkeit der Schwarminformationen, zuzuweisen und/oder aus dem Schwarm zu entfernen. Dadurch kann vorteilhaft eine dynamische Gruppierung erfolgen, welche insbesondere automatisch erfolgen kann. Zudem kann vorteilhaft ein Bedienkomfort erhöht werden. Das Schwarmbildungsmodul ist insbesondere zumindest teilweise einstückig mit der Recheneinheit ausgebildet oder bildet insbesondere ein von der Recheneinheit separates Rechengerät, insbesondere mit separater Prozessoreinheit und/oder Speichereinheit, aus. Die von dem Schwarmbildungsmodul verwendeten Daten können insbesondere zumindest Positionsdaten eines Gegenstands, Bewegungsdaten eines Gegenstands, gegenstandsspezifische Daten, beispielsweise Typdaten einer Handwerkzeugmaschine und/oder Benutzereinstellungsdaten eines Gegenstands, ein Ladezustand eines Gegenstands und/oder Sensordaten eines einem Gegenstand zugeordneten Sensors umfassen. Insbesondere ist vorstellbar, dass bei einem Zuweisungsvorgang eine Zuweisung zu einem Schwarm und/oder bei einem Entfernungsvorgang eine Entfernung aus einem Schwarm für einen Bediener erkennbar quittiert wird, beispielsweise mittels eines akustischen, optischen und/oder taktil durch den Bediener fühlbaren Signals. Das Schwarmbildungsmodul ist insbesondere programmierbar, vorzugsweise nach- und/oder umprogrammierbar, ausgebildet. Dadurch können vorteilhaft Randbedingungen für eine Zugehörigkeit zu einem Schwarm festlegbar sein. Es ist vorstellbar, dass das Schwarmbildungsmodul den zumindest einen Gegenstand mehr als einem Schwarm zuordnet und/oder dass das Schwarmbildungsmodul den zumindest einen Gegenstand einer Teilmenge einer Mehrzahl von Schwärmen zuordnet, welche insbesondere bestimmte, vorgegebene Randbedingungen erfüllen. Insbesondere können mehrere Schwärme gleichzeitig, insbesondere sich räumlich überschneidend, existieren und/oder von der Recheneinheit verwaltet werden. Die Recheneinheit ist insbesondere dazu vorgesehen, Befehle einem einzelnen Schwarm und/oder einer Mehrzahl von Schwärmen zuzuweisen. Insbesondere ist vorstellbar, dass eine Zuweisung und/oder Entfernung eines Gegenstands zu/aus einem Schwarm eine Bedienerbestätigung erfordert. Dazu kann einem Bediener insbesondere eine Bestätigungsaufforderung durch das Schwarmbildungsmodul und/oder die Recheneinheit übermittelt werden, beispielsweise über ein optisches und/oder akustisches Signal und/oder mittels einer Nachricht, welche beispielsweise auf einem Bedienterminal und/oder einem Smartphone angezeigt werden könnte. Insbesondere ist das Schwarmbildungsmodul selbstlernend ausgebildet. Ein selbstlernendes Schwarmbildungsmodul kann beispielsweise aufgrund vorangegangener Bestätigungen und/oder Ablehnungen bestimmter Gegenstände schlussfolgern, ob ein neu auftauchender Gegenstand einem Schwarm zugewiesen werden sollte oder nicht. Zudem könnte ein selbstlernendes Schwarmbildungsmodul aufgrund von Nutzungsstatistiken von Gegenständen eines Schwarms diesem Schwarm weitere Gegenstände zuweisen und/oder Gegenstände aus dem Schwarm entfernen.

Zudem wird vorgeschlagen, dass zumindest einer der durch die Recheneinheit ausgegebenen Befehle dazu vorgesehen ist, eine Einzelfunktion zumindest eines der Gegenstände, insbesondere der Handwerkzeugmaschine und/oder eines der Handwerkzeugmaschine zugeordneten Sensors, zu aktivieren und/oder zu blockieren. Dadurch kann vorteilhaft eine Schwarmintelligenz zur Überwachung und/oder zur Verwaltung einer Vielzahl von Gegenständen genutzt werden. Zudem kann vorteilhaft eine hohe Bedienerfreundlichkeit erreicht werden, beispielsweise indem Voreinstellungen eines Gegenstands bereits vor Benutzung für eine bestimmte Aufgabe angepasst werden können. Außerdem kann vorteilhaft eine hohe Bedienersicherheit erreicht werden, indem beispielsweise bestimmte Betriebsmodi durch die Recheneinheit in unsicheren Situationen blockiert sind. Beispielsweise könnte eine Benutzung eines lärmemittierenden Gegenstands des Schwarms erst freigeschalten werden, wenn alle sich in einem bestimmten Umkreis um den lärmemittierenden Gegenstand befindlichen, als Gehörschutz ausgebildeten Gegenstände eines Schwarms zurückmelden, dass sie in Position sind. Eine "Einzelfunktion" umfasst insbesondere zumindest eine Aktivierungsfunktion eines Gegenstands, eine Deaktivierungsfunktion eines Gegenstands, eine Aufwachfunktion eines Gegenstands, eine Ruhefunktion eines Gegenstands, ein Betriebsmodus eines Gegenstands, eine Ladefunktion eines Gegenstands, eine Funktion eines Sensors eines Gegenstands, beispielsweise eine, insbesondere temporäre, Aktivierung einer Sensorfunktion und/oder ein Auslesen eines Sensorwerts.

Weiter wird vorgeschlagen, dass die Recheneinheit ein Schwarmüberprüfungsmodul aufweist, welches dazu vorgesehen ist, den Schwarm auf Vollständigkeit zu überprüfen. Dadurch kann vorteilhaft ein hoher Bedienkomfort erreicht werden, insbesondere indem eine Wahrscheinlichkeit eines Vergessens eines benötigten Gegenstands verringert werden kann. Zudem kann vorteilhaft eine Sicherheit gegenüber Diebstahl und/oder Verlust eines einem Schwarm zugehörigen Gegenstands erhöht werden. Das Schwarmüberprüfungsmodul ist insbesondere zumindest teilweise einstückig mit der Recheneinheit ausgebildet oder bildet insbesondere ein von der Recheneinheit separates Rechengerät, insbesondere mit separater Prozessoreinheit und/oder Speichereinheit, aus. Insbesondere ist die Recheneinheit dazu vorgesehen zumindest periodisch einen Abgleich eines Ist-Inventars eines Schwarms mit zumindest einem in der Recheneinheit hinterlegten Soll-Inventar vorzunehmen. Das Ist-Inventar wird hierbei insbesondere von den Antworten einer aktuellen, an alle Gegenstände des Schwarms gesendeten Abfrage gebildet. Das Soll-Inventar ist insbesondere aus einer vorangegangenen Antwort aller Gegenstände des Schwarms gebildet, insbesondere unter Berücksichtigung möglicher in der Zwischenzeit hinzugekommener und/oder entfernter Gegenstände. Alternativ kann das Soll-Inventar auch von einer in der Speichereinheit der Recheneinheit hinterlegten Soll-Inventarliste, welche einen Schwarm definiert, gebildet sein. Dadurch kann vorteilhaft sichergestellt werden, dass bestimmte vordefinierte Sets von Gegenständen, welche einen Schwarm bilden, vollständig vorhanden und einsatzbereit sind. Die Soll-Inventarliste beinhaltet beispielsweise einen vorgesehenen Inhalt eines Handwerkerfahrzeugs. Zudem ist vorstellbar, dass die Recheneinheit dazu vorgesehen ist, eine Warnmeldung auszugeben, falls ein Gegenstand fehlt. Insbesondere erfolgt eine Überprüfung des Schwarms mittels des Schwarmüberprüfungsmoduls unter Berücksichtigung eines Energiezustands der Gegenstände. Gegenstände, deren Ladezustand bei einer folgenden Abfrage zu gering für eine Aussendung sein könnte, werden aus dem Soll-Inventar und/oder der Soll-Inventarliste gestrichen. Vorzugsweise erfolgt eine Überprüfung des Schwarms und/oder eine Benachrichtigung des Bedieners mittels der Warnmeldung unabhängig von einem Laptop, Smartphone und/oder Tablet.

Weiterhin wird vorgeschlagen, dass der Schwarm, insbesondere die Gegenstände des Schwarms, eine Vielzahl an Sensoren aufweist, wobei die Recheneinheit dazu vorgesehen ist, anhand der Schwarminformationen, insbesondere anhand von Sensordaten zumindest eines Teils der Sensoren des Schwarms, einen Sensor des Schwarms zu kalibrieren und/oder eine Kalibrationsanweisung an einen Bediener eines dem Schwarm zugehörigen Gegenstands auszugeben. Dadurch kann vorteilhaft eine hohe Präzision und/oder Zuverlässigkeit von dem Schwarm zugehörigen Gegenständen und/oder Sensoren erreicht werden. Zudem kann vorteilhaft eine Kalibration frei von zusätzlichen Kalibrationsgeräten und/oder unabhängig von einem Arbeitsaufwand für einen Bediener ermöglicht werden. Die Sensoren sind insbesondere als Umgebungssensoren, beispielsweise Temperatursensoren, Luftfeuchtigkeitssensoren, Positionssensoren, Lagesensoren, Lichtsensoren und/oder Lärmsensoren, und/oder als Betriebszustandssensoren, beispielweise Vibrationssensoren, Beschleunigungssensoren, Kraftsensoren, Energieverbrauchssensoren, Ladezustandssensoren und/oder Bedienerkontaktsensoren, ausgebildet. Zudem können die Sensoren insbesondere dazu vorgesehen sein, elektronische und/oder mechanische Einstellungen eines Gegenstands auszulesen und/oder eine Zeitdauer zu messen. Insbesondere ist einem Sensor eine Speichereinheit zumindest zu einem Abspeichern zumindest von Sensordaten und/oder zumindest eines Verlaufs von Sensordaten zugeordnet. Eine Kalibrationsanweisung kann insbesondere einem Bediener direkt als eine Anzeige einer Anzeigeeinheit der Recheneinheit zugänglich gemacht werden, dem Bediener per Kurznachricht zugesandt werden und/oder durch ein anderweitiges Signalzeichen, beispielsweise durch ein Aufleuchten einer farbigen Leuchte an dem zu kalibrierenden Gegenstand und/oder Sensor, mitgeteilt werden. Zudem ist vorstellbar, dass die Recheneinheit ein Diskriminationsmodul aufweist, welches dazu vorgesehen ist, für eine Kalibration eines Gegenstands und/oder Sensors geeignete weitere Gegenstände und/oder Sensoren zu identifizieren. Dazu erkennt das Diskriminationsmodul, insbesondere selbstständig und/oder selbstlernend, vorzugsweise Gegenstände und/oder Sensoren, welche abweichende, für eine Kalibration ungeeignete Werte aufweisen. Solche ungeeigneten Werte können beispielsweise durch eine Lokalisation von Sensoren und/oder Gegenständen in unterschiedlichen Umgebungen, beispielsweise innerhalb und außerhalb eines geschlossenen Raums, auftreten.

Außerdem wird vorgeschlagen, dass die Recheneinheit, insbesondere eine Rechenkapazität der Recheneinheit, zumindest zeitabschnittsweise, insbesondere zumindest für einen Zeitraum einer Existenz des Schwarms, um ein Rechenmodul, welches zumindest einem Gegenstand des Schwarms zugeordnet ist, insbesondere um zumindest eine Rechenkapazität eines Rechenmoduls zumindest eines Gegenstands des Schwarms, vorzugsweise um zumindest eine Mehrzahl an Rechenmodulen und/oder um Rechenkapazitäten einer Mehrzahl an Rechenmodulen zumindest einer Mehrzahl an Gegenständen des Schwarms, erweitert ist. Dadurch kann vorteilhaft eine hohe Effektivität hinsichtlich einer Ausnutzung einer Gesamtrechenkapazität eines Schwarms erreicht werden. Dadurch kann vorteilhaft eine dynamische Zuordnung von Rechenleistung ermöglicht werden, beispielsweise indem Berechnungsaufgaben an Rechenmodule von Gegenständen vergeben werden, welche einen Energiespeicher mit einem guten Ladezustand aufweisen und/oder deren Benutzung aktuell nicht vorgesehen ist. Zudem können vorteilhaft Berechnungsaufgaben dynamisch auf eine Mehrzahl an Prozessoren verteilt werden, wodurch eine Berechnungsgeschwindigkeit vorteilhaft gesteigert werden kann. Darunter, dass die Recheneinheit um ein Rechenmodul eines Gegenstands "erweitert" ist, soll insbesondere verstanden werden, dass die Recheneinheit neben einem zentralen Rechenmodul zusätzlich weitere, Gegenständen zugeordnete, Rechenmodule aufweist, und dass das zentrale Rechenmodul und die weiteren Rechenmodule zu einem drahtlosen Rechnernetzwerk, insbesondere zu einer Cloud, vernetzt sind. Insbesondere ist vorstellbar, dass die Recheneinheit, insbesondere eine Rechenkapazität der Recheneinheit, erweiterbar ist, insbesondere durch ein Hinzufügen neuer Gegenstände, beispielsweise neue Handwerkzeugmaschinen, neue Sensoren, insbesondere mit neuer Sensortechnologie, und/oder neue Rechenmodule, insbesondere mit erhöhter Rechenleistung, zu einem Schwarm. Dadurch können vorteilhaft neue Funktionen zu der Recheneinheit hinzugefügt und/oder bestehende Funktionen verbessert, insbesondere beschleunigt, werden.

Wenn eine Rechenleistungsverteilung, insbesondere einer anfallenden Rechenleistung, auf Rechenmodule der, insbesondere erweiterten, Recheneinheit in Abhängigkeit der Schwarminformationen gesteuert ist, kann vorteilhaft eine optimale Ausnutzung einer in dem Schwarm vorhandenen Rechenkapazität erreicht werden. Insbesondere kann die Schwarminformation zumindest einen Energiezustand des Schwarms, eine Ladeenergieverteilung innerhalb des Schwarms, eine Aktivitätsverteilung innerhalb des Schwarms, Informationen über den Benutzungszustand einzelner Gegenstände des Schwarms und/oder Informationen über die Rechenleistung einzelner Rechenmodule von Gegenständen und/oder Sensoren innerhalb des Schwarms umfassen. Insbesondere ist die Rechenleistungsverteilung derart gesteuert, dass die anfallende Rechenleistung auf möglichst viele unterschiedliche Rechenmodule verteilt wird. Insbesondere ist die Rechenleistungsverteilung derart gesteuert, dass die anfallende Rechenleistung zusammengenommen einen möglichst geringen Energieverbrauch erzeugt, insbesondere von in Energiespeichern, vorzugsweise Batterien, gespeicherter Energie, wozu insbesondere Rechenmodule, deren zugehörige Gegenstände sich in einer Ladestation befinden und/oder direkt mit einem Stromnetz verbunden sind, bei einer Verteilung der anfallenden Rechenleistung bevorzugt werden.

Außerdem wird vorgeschlagen, dass die Recheneinheit zumindest ein Wartungsmodul aufweist, welches dazu vorgesehen ist, zumindest einen Servicezustand zumindest eines Rechenmoduls des Schwarms und/oder zumindest eines Gegenstands des Schwarms zu überprüfen und in Abhängigkeit des Servicezustands einen Wartungsschritt einzuleiten, insbesondere zumindest ein Softwareupdate an das Rechenmodul zu senden und/oder einem Bediener einen Wartungsbedarf anzuzeigen. Dadurch kann vorteilhaft eine effektive Wartung der Gegenstände des Schwarms ermöglicht werden, wodurch vorteilhaft Ausfallzeiten des Schwarms und/oder von Teilen des Schwarms verringert werden können. Zudem kann vorteilhaft sichergestellt werden, dass einen Schwarm bildende Gegenstände optimal aufeinander abgestimmt sind, insbesondere indem sie untereinander kompatible und/oder optimierte Softwareversionen aufweisen. Außerdem ist vorstellbar, dass Wartungsschritte dadurch vorteilhaft zeitlich aufeinander abgestimmt werden können. Beispielsweise können Wartungsschritte an mehreren Gegenständen gleichzeitig und/oder zeitnah zueinander erfolgen, wodurch Ausfallzeiten vorteilhaft gering gehalten werden können. Das Wartungsmodul ist insbesondere zumindest teilweise einstückig mit der Recheneinheit ausgebildet oder bildet insbesondere ein von der Recheneinheit separates Rechengerät, insbesondere mit separater Prozessoreinheit und/oder Speichereinheit, aus. Unter einem "Servicezustand" soll insbesondere eine Aktualität einer Firmware und/oder ein zeitlicher Abstand bis zu einer nächsten manuellen Wartung und/oder ein anstehender Austausch eines Verschleißteils verstanden werden. Unter einem "Wartungsschritt" soll insbesondere zumindest ein Softwareupdate, insbesondere Firmwareupdate, zumindest eine manuelle Wartung und/oder zumindest ein Austausch eines Verschleißteils verstanden werden. Vorzugsweise kennt und/oder verwaltet das Rechenmodul alle Servicezustände der Gegenstände des Schwarms.

Zusätzlich wird vorgeschlagen, dass der Schwarm, insbesondere die Gegenstände des Schwarms, eine Vielzahl an Sensoren aufweist, wobei eine Sensoraktivierung und/oder eine Sensornutzung in Abhängigkeit der Schwarminformationen, insbesondere mittels Befehlen der Recheneinheit, gesteuert ist. Durch eine Vielzahl an Sensoren kann vorteilhaft ein besonders vollständiges Bild des Schwarms, insbesondere des Zustands des Schwarms, gewonnen werden, wodurch vorteilhaft eine Schwarmintelligenz weiter erhöht werden kann. Durch eine schwarmabhängige Steuerung der Sensornutzung kann vorteilhaft eine hohe Effektivität erreicht werden. Beispielsweise kann eine überflüssige Mehrfachmessung eines Datenwerts durch mehrere ähnliche, nah benachbarte Sensoren vermieden werden. Außerdem kann bei einem Vorhandensein vieler Sensoren an einem gemeinsamen Ort vorteilhaft eine intelligente Auswahl von besonders geeigneten Sensoren, beispielsweise aufgrund von Messgenauigkeit, Energieverbrauch und/oder Energiezustand eines Sensors, aus der Vielzahl von Sensoren getroffen werden

Zudem wird vorgeschlagen, dass der Schwarm, insbesondere die Gegenstände des Schwarms, eine Vielzahl an Sensoren aufweist, wobei die Recheneinheit ein Plausibilitätsmodul aufweist, welches dazu vorgesehen ist, in Abhängigkeit der Schwarminformationen, insbesondere von Positions- und/oder Ortsinformationen von Sensoren, Sensordaten eines Sensors des Schwarms mittels einer Ansteuerung und/oder eines Auslesens eines geeigneten weiteren Sensors des Schwarms, insbesondere durch Datenabgleich der Sensordaten des Sensors und des weiteren Sensors, auf Plausibilität zu untersuchen. Dadurch kann vorteilhaft eine hohe Messsicherheit und/oder eine Messgenauigkeit erreicht werden, insbesondere indem Messfehler effektiv, beispielsweise anhand von Abweichungen der Sensordaten zweier Sensoren, erkannt werden können. Das Plausibilitätsmodul ist insbesondere zumindest teilweise einstückig mit der Recheneinheit ausgebildet oder bildet insbesondere ein von der Recheneinheit separates Rechengerät, insbesondere mit separater Prozessoreinheit und/oder Speichereinheit, aus. Insbesondere führt die Recheneinheit ein sequenzielles Abfragen benachbarter Sensoren durch, wobei vorzugsweise die Abfrage auf Sensoren beschränkt ist, welche eine ausreichende Restenergie und/oder einen aufladbaren Energiespeicher aufweisen, und wobei insbesondere das Plausibilitätsmodul im Anschluss an einen Empfang der Sensordaten diese unter Berücksichtigung derer relativen Positionierungen zueinander auf Plausibilität untersucht. Es ist vorstellbar, dass eine Anzeigeeinheit der Recheneinheit und/oder ein Hinweiselement und/oder Anzeigeelement eines Gegenstands und/oder Sensors dazu vorgesehen ist, Sensoren und/oder Gegenstände mit unplausiblen Daten optisch zu kennzeichnen. Das Hinweiselement und/oder das Anzeigeelement ist insbesondere als eine, einem Gegenstand und/oder einem Sensor zugeordnete Leuchte, insbesondere LED-Leuchte, ausgebildet.

Des Weiteren wird vorgeschlagen, dass die Recheneinheit ein Ereigniserkennungsmodul umfasst, welches dazu vorgesehen ist, anhand der Schwarminformationen, insbesondere anhand von Sensordaten von Sensoren des Schwarms, insbesondere von Sensoren von Gegenständen des Schwarms, ein Ereignis zu erkennen, welches zumindest einen Teil des Schwarms betrifft. Dadurch kann vorteilhaft eine automatisierte Ereigniserkennung ermöglich werden, wodurch insbesondere ein rasches Reagieren auf das Ereignis möglich wird. Das Ereigniserkennungsmodul ist insbesondere zumindest teilweise einstückig mit der Recheneinheit ausgebildet oder bildet insbesondere ein von der Recheneinheit separates Rechengerät, insbesondere mit separater Prozessoreinheit und/oder Speichereinheit, aus. Insbesondere ist das Ereigniserkennungsmodul dazu vorgesehen, eine Vielzahl von durch die Kommunikationseinheit empfangenen Sensordaten zu analysieren und eine Mustererkennung durchzuführen. Insbesondere bei einer Erkennung eines bekannten Musters ist das Ereigniserkennungsmodul dazu vorgesehen, mittels der Recheneinheit und/oder der Kommunikationseinheit Befehle an zumindest einen Teil der Gegenstände und/oder Sensoren des Schwarms auszugeben. Beispielsweise erkennt das Ereigniserkennungsmodul, dass Beschleunigungssensoren der Gegenstände des Schwarms zufällig verteilte Vibrationen registrieren. Daraus schlussfolgert das Ereigniserkennungsmodul insbesondere, dass sich der Schwarm im Inneren eines fahrenden Fahrzeugs befindet und sendet mittels der Kommunikationseinheit Befehle an die Gegenstände, die sie in einen Ruhemodus versetzen. Ein weiteres Beispiel für eine Mustererkennung wären insbesondere eine Erkennung einer Reihenfolge einer Aktivierung von einzelnen Gegenständen und ein daraus geschlussfolgerter bestimmter Arbeitsvorgang, welcher eine Wahrscheinlichkeit einer anschließenden Benutzung eines weiteren Gegenstands des Schwarms erhöht, welcher daraufhin automatisch vorbereitet, beispielsweise vorgewärmt, werden könnte.

Wenn die Erkennung des Ereignisses auf einer, insbesondere von einem vorgegebenen Bewegungsradius und/oder einer Gesamtbewegung des Schwarms abweichenden, Bewegung zumindest eines Teils des Schwarms basiert, kann vorteilhaft eine Schwarmintelligenz zur Überwachung und/oder zur Verwaltung, insbesondere einer Ortsüberwachung und/oder einer Ortsverwaltung einer Vielzahl von Gegenständen genutzt werden. Insbesondere soll unter einer "Bewegung" eine räumliche Translation, eine Rotation und/oder eine Vibration verstanden werden.

Wenn die Erkennung des Ereignisses auf einer Temperaturverteilung an verschiedenen Orten innerhalb des Schwarms basiert, kann vorteilhaft eine Schwarmintelligenz zur Überwachung und/oder zur Verwaltung, insbesondere einer Vielzahl von Gegenständen genutzt werden. Beispielsweise kann mittels eines raschen Anstiegs und/oder Abfalls einer Temperatur am Ort zumindest eines Teils des Schwarms darauf geschlossen werden, dass in der Nähe eine Tür geöffnet wurde und somit ein baldiger Einsatz zumindest eines Teils der Gegenstände bevorstehen könnte. Eine Temperaturänderung am Ort eines Gegenstands führt demnach insbesondere zur Aktivierung einer Aufwachfunktion des Gegenstands.

Weiterhin wird vorgeschlagen, dass die Kommunikationseinheit ein Verschlüsselungsmodul aufweist, welches dazu vorgesehen ist, eine Datenkommunikation innerhalb des Schwarms und/oder mit der Recheneinheit zu verschlüsseln und/oder zu entschlüsseln. Dadurch kann vorteilhaft eine hohe Sicherheit erreicht werden. Insbesondere kann eine missbräuchliche Manipulation zumindest eines Teils des Schwarms unterbunden werden. Das Verschlüsselungsmodul ist insbesondere zumindest teilweise einstückig mit der Recheneinheit ausgebildet oder bildet insbesondere ein von der Recheneinheit separates Rechengerät, insbesondere mit separater Prozessoreinheit und/oder Speichereinheit, aus. Zudem ist das Verschlüsselungsmodul zu einer Anonymisierung von Bedienerdaten eines Bedieners zumindest eines Gegenstands des Schwarms während einer Datenübertragung vorgesehen. Dadurch kann vorteilhaft ein hoher Grad an Datenschutz erreicht werden.

Ferner wird ein System vorgeschlagen, dass die erfindungsgemäße Verwaltungsvorrichtung zur Überwachung und/oder zur Verwaltung einer Vielzahl von Handwerkzeugmaschinen und/oder Zubehör für Handwerkzeugmaschinen umfassenden Gegenständen und einen eine Vielzahl von Gegenständen ausgebildeten Schwarm umfasst. Durch die erfindungsgemäße Ausgestaltung des Systems kann vorteilhaft eine Schwarmintelligenz zur Überwachung und/oder zur Verwaltung einer Vielzahl von Gegenständen genutzt werden. Insbesondere kann dadurch eine Organisation der Gegenstände verbessert und/oder vereinfacht werden, beispielsweise indem Ladevorgänge, Betriebsmodi und/oder Zusammenstellungen von Werkzeuggruppen für bestimmte Aufgaben automatisiert und/oder optimiert werden können. Zudem kann vorteilhaft, insbesondere mittels der Informationsausgabe an einen Bediener, eine Arbeitserleichterung und/oder Arbeitsunterstützung eines Bedieners zumindest eines der Gegenstände ermöglicht werden

Zudem wird vorgeschlagen, dass das System eine Zugriffskontrolleinheit umfasst. Dadurch kann vorteilhaft eine Schwarmintelligenz zur Überwachung und/oder zur Verwaltung einer Vielzahl von Gegenständen genutzt werden. Zudem kann vorteilhaft ein hoher Bedienkomfort erreicht werden, beispielsweise indem Gegenstände aktiviert und/oder vorbereitet werden, sobald die Zugriffskontrolleinheit einen Bediener registriert. Beispielsweise überwacht eine Kamera ein Gelände und/oder einen Bereich, in welchem die Gegenstände des Schwarms gelagert sind, wobei bei einer Registrierung einer Person durch die Kamera die Gegenstände des Schwarms mittels Befehlen von der Recheneinheit einsatzbereit geschalten werden. Insbesondere ist das System mit der Zugriffskontrolleinheit dazu vorgesehen, eine, vorzugsweise fein abstimmbare, Berechtigungsstruktur und/oder ein Berechtigungsmanagement bereitzustellen, welche einem Bediener abhängig von einer dem Bediener zugewiesenen Zugriffsberechtigung Zugriff auf zumindest einen Teil der Gegenstände des Schwarms gewährt und/oder verwehrt. Das System mit der Zugriffskontrolleinheit weist insbesondere ein Zugriffsberechtigungsmodul auf. Das Zugriffsberechtigungsmodul ist insbesondere zumindest teilweise einstückig mit der Recheneinheit ausgebildet oder bildet insbesondere ein von der Recheneinheit separates Rechengerät, insbesondere mit separater Prozessoreinheit und/oder Speichereinheit, aus. Das Zugriffsberechtigungsmodul ist dazu vorgesehen, die Berechtigungsstruktur und/oder das Berechtigungsmanagement des Systems mit der Zugriffskontrolleinheit zu verwalten.

Außerdem wird vorgeschlagen, dass die Zugriffskontrolleinheit dazu vorgesehen ist, in Abhängigkeit von einer Zugriffsberechtigung eines Bedieners, welcher Zugriff auf zumindest einen Teil des Schwarms erlangen möchte und/oder in Abhängigkeit von zumindest einer Schwarminformation, eine Funktion zumindest eines Teils des Schwarms, insbesondere für den Bediener, freizuschalten und/oder zu blockieren. Dadurch kann vorteilhaft eine Sicherheit erhöht werden. Insbesondere können bestimmte Gegenstände nur einem Personenkreis zugänglich gemacht werden, welcher, beispielsweise durch eine Einweisung und/oder durch eine Zugehörigkeit zu einem Unternehmen, etc., eine Befugnis besitzt, besagten Gegenstand zu bedienen. Zudem kann dadurch vorteilhaft ein Diebstahl und/oder ein versehentliches Entwenden eines Gegenstands erschwert werden. Wenn sich beispielsweise ein Gegenstand von einem Schwarm entfernt, ohne dass ein dazu berechtigter Bediener von der Zugriffskontrolleinheit registriert ist, kann vorteilhaft eine Alarmfunktion, insbesondere eine Diebstahlalarmfunktion, ausgelöst werden. Alternativ oder zusätzlich kann beispielsweise eine Alarmfunktion ausgelöst werden, wenn ein Gegenstand eines Schwarms bewegt und/oder aktiviert wird, ohne dass ein dazu berechtigter Bediener bei der Zugriffskontrolleinheit angemeldet ist.

Wenn die Zugriffskontrolleinheit zumindest eine Kamera, insbesondere mit einer Gesichtserkennungsfunktion, und/oder zumindest einen Bewegungsmelder umfasst, kann vorteilhaft eine Sicherheit weiter erhöht werden. Insbesondere ist das Zugriffsberechtigungsmodul dazu vorgesehen, die Zugriffskontrolleinheit zu steuern und/oder zu regeln. Die Kamera und/oder der Bewegungsmelder ist insbesondere dazu vorgesehen, einen Eingangsbereich und/oder ein Gelände, beispielsweise ein Werksgelände und/oder eine Werkshalle, zu überwachen. Alternativ oder zusätzlich kann die Zugriffskontrolleinheit zumindest ein Zugangskontrollsystem umfassen. Das Zugangskontrollsystem ist insbesondere als ein Zugangsportal, als eine Türe, als eine Karusselltür und/oder als eine Vereinzelungsanlage, wie beispielsweise ein Drehkreuz, ausgebildet, welche vorzugsweise eine Vorrichtung zu einer Identifizierung, beispielsweise einen ID-Kartenleser, einen Fingerabdruckscanner o.ä., aufweist.

Ferner wird ein Verwaltungsverfahren zur Überwachung und/oder zur Verwaltung einer Vielzahl von Handwerkzeugmaschinen und/oder Zubehör für Handwerkzeugmaschinen umfassenden Gegenständen, welche zumindest einen Schwarm ausbilden, vorgeschlagen, wobei in einem Verfahrensschritt in Abhängigkeit der Schwarminformationen der Gegenstände des Schwarms Befehle an zumindest einen der Gegenstände des Schwarms ausgegeben werden. Zumindest einer der Befehle wird in Abhängigkeit von einem Energiezustand des Schwarms und/oder einem Energiezustand zumindest eines Gegenstands des Schwarms vor einer Ausgabe durch eine Recheneinheit derart modifiziert, dass bei einem Empfang durch eine Kommunikationseinheit des zumindest einen Gegenstands ein Energiesparmodus und/oder ein Betrieb mit reduziertem Energieverbrauch einer bestimmten Funktion des zumindest einen Gegenstands angesteuert wird und/oder ein zeitlicher Abstand von aufeinanderfolgenden, an den zumindest einen Gegenstand gerichteten Befehlen abhängig von dem Energiezustand beeinflusst wird und/oder bei einem Vorhandensein mehrerer Gegenstände eine Ansteuerung der Gegenstände des Schwarms bevorzugt wird, welche den höchsten Ladezustand aufweisen. Durch die erfindungsgemäße Ausgestaltung des Verwaltungsverfahrens kann vorteilhaft eine Schwarmintelligenz zur Überwachung und/oder zur Verwaltung einer Vielzahl von Gegenständen genutzt werden. Insbesondere kann dadurch eine Organisation der Gegenstände verbessert und/oder vereinfacht werden.

Die erfindungsgemäße Verwaltungsvorrichtung, das erfindungsgemäße System und/oder das erfindungsgemäße Verwaltungsverfahren soll/sollen hierbei nicht auf die oben beschriebene Anwendung und Ausführungsform beschränkt sein. Insbesondere kann die erfindungsgemäße Verwaltungsvorrichtung, das erfindungsgemäße System und/oder das erfindungsgemäße Verwaltungsverfahren zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: Eine schematische Darstellung eines erfindungsgemäßen Systems umfassend eine Vorrichtung zur Überwachung und/oder zur Verwaltung einer Vielzahl von Gegenständen,
- Fig. 2: eine schematische Darstellung zweier beispielhafter Gegenstände des Systems,
- Fig. 3: eine schematische Darstellung einer Recheneinheit der Vorrichtung zur Überwachung und/oder zur Verwaltung der Vielzahl von Gegenständen und
- Fig. 4: ein Ablaufdiagramm eines Verfahrens zur Überwachung und/oder zur Verwaltung einer Vielzahl von Gegenständen.

### Beschreibung des Ausführungsbeispiels

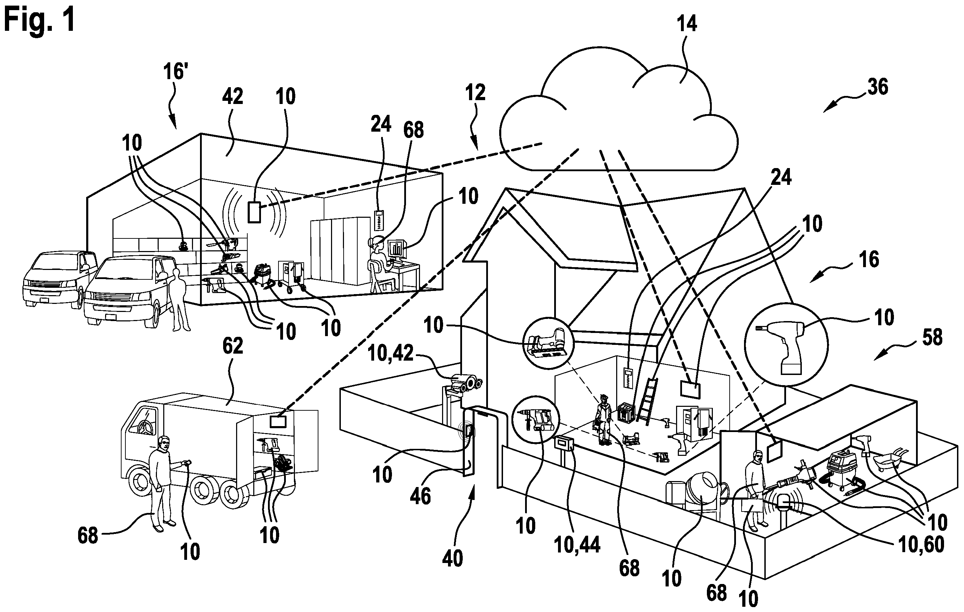

Fig. 1 zeigt eine schematische Darstellung eines Systems 36. Das System 36 weist eine Vorrichtung auf. Das System 36 weist eine Vielzahl von Gegenständen 10 auf. Die Vorrichtung ist zur Überwachung und/oder zur Verwaltung der Vielzahl von Gegenständen 10 vorgesehen. Ein Teil der Gegenstände 10 bildet einen Schwarm 16 aus. Ein weiterer Teil der Gegenstände 10 bildet einen weiteren Schwarm 16' aus. Der Schwarm 16 und der weitere Schwarm 16' weisen keine gemeinsamen Gegenstände 10 auf. Alternativ ist vorstellbar, dass zumindest ein Teil der Gegenstände 10 mehr als einem Schwarm 16, 16' zugeordnet ist. Die Gegenstände 10 sind als Handwerkzeugmaschinen oder Zubehör für Handwerkzeugmaschinen ausgebildet.

Das System 36 weist eine Zugriffskontrolleinheit 40 auf. Die Zugriffskontrolleinheit 40 ist dazu vorgesehen, in Abhängigkeit von einer Zugriffsberechtigung eines Bedieners 68, welcher Zugriff auf zumindest einen Teil des Schwarms 16, 16' erlangen möchte, eine Funktion eines Teils des Schwarms 16, 16' freizuschalten. Die Zugriffskontrolleinheit 40 ist dazu vorgesehen, in Abhängigkeit von einer Zugriffsberechtigung eines Bedieners 68, welcher Zugriff auf zumindest einen Teil des Schwarms 16, 16' erlangen möchte, eine Funktion eines Teils des Schwarms 16, 16' zu blockieren. Die Zugriffskontrolleinheit 40 ist dazu vorgesehen, in Abhängigkeit der Schwarminformationen eine Funktion eines Teils des Schwarms 16,16` freizuschalten. Die Zugriffskontrolleinheit 40 ist dazu vorgesehen, in Abhängigkeit der Schwarminformationen eine Funktion eines Teils des Schwarms 16, 16' zu blockieren. Die Zugriffskontrolleinheit 40 bildet einen Gegenstand 10 aus.

Die Zugriffskontrolleinheit 40 umfasst eine Kamera 42. Die Kamera 42 ist dazu vorgesehen, Personen zu registrieren. Die Kamera 42 ist dazu vorgesehen, Bediener 68 von Gegenständen 10 zu erkennen. Die Kamera 42 weist ein Rechenmodul (nicht gezeigt) auf. Die Kamera 42 ist dazu vorgesehen, mit Hilfe des Rechenmoduls Personen mittels einer Gesichtserkennung zuzuordnen. Zu einer Gesichtserkennung werden Bilder der Kamera 42 mit in einem zentralen Speichermodul 72 des Rechenmoduls und/oder einer übergeordneten Recheneinheit 14 der Vorrichtung abgespeicherten Bildern abgeglichen. Die Kamera 42 bildet einen Gegenstand 10 aus.

Die Zugriffskontrolleinheit 40 umfasst einen Bewegungsmelder 44. Der Bewegungsmelder 44 ist dazu vorgesehen, Bewegungen in einem festgelegten Bereich 58 zu erkennen. Der festgelegte Bereich 58 ist von einem durch einen Bauzaun abgegrenztes Areal rund um ein Haus gebildet. Die Gegenstände 10 des Scharms 16 sind teilweise innerhalb des Bereichs 58 verortet. Die Gegenstände 10 des Schwarms 16 sind teilweise außerhalb des Bereichs 58 in einem Handwerkerfahrzeug 62 verordnet. Der Bewegungsmelder 44 bildet einen Gegenstand 10 aus. Die Zugriffskontrolleinheit 40 umfasst ein Zugangskontrollsystem 46. Das Zugangskontrollsystem 46 ist als ein Zugangsportal ausgebildet, welches zu einer Identitätsfeststellung von das Zugangsportal durchschreitenden Personen vorgesehen ist. Das Zugangskontrollsystem 46 bildet einen Gegenstand 10 aus.

Das System 36 weist eine Alarmierungsvorrichtung 60 auf. Die Alarmierungsvorrichtung 60 ist als eine Warnleuchte ausgebildet. Die Alarmierungsvorrichtung 60 ist dazu vorgesehen, bei einer Detektion eines unbefugten Zugangs einer Person zu dem Bereich 58 und/oder eines unbefugten Aufenthalts einer Person in dem Bereich 58 eine Warnmeldung auszugeben. Die Alarmierungsvorrichtung 60 bildet einen Gegenstand 10 aus.

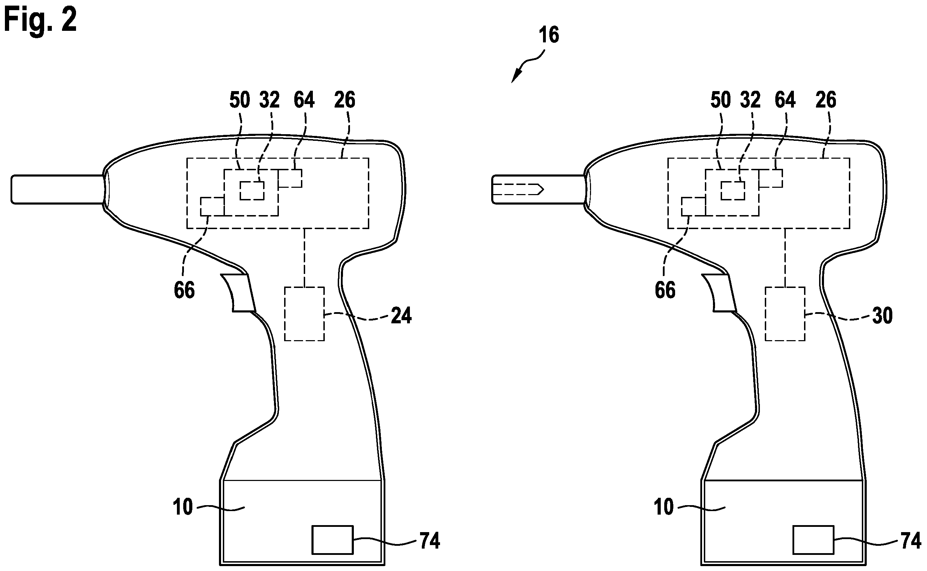

Die Vorrichtung weist eine Kommunikationseinheit 12 auf. Die Kommunikationseinheit 12 ist zur Kommunikation mit den Gegenständen 10 vorgesehen. Die Kommunikationseinheit 12 umfasst eine Vielzahl an Kommunikationsmodulen 50. Fig. 2 zeigt zwei beispielhafte Gegenstände 10. Die Gegenstände 10 sind dem Schwarm 16 zugeordnet. Die Gegenstände 10 weisen ein Anzeigeelement 74 auf. Das Anzeigeelement 74 ist dazu vorgesehen, eine Zugehörigkeit zu einem Schwarm 16, 16' anzuzeigen. Dazu können die Anzeigeelemente 74 von Gegenständen 10 eines gemeinsamen Schwarms 16, 16' beispielsweise in einer gemeinsamen Farbe leuchten, einen gemeinsamen Schriftzug und/oder ein gemeinsames Symbol anzeigen. Der Schwarm 16, 16' weist eine Vielzahl an Sensoren 24, 30 auf. Die Sensoren 24, 30 sind teilweise Gegenständen 10 zugeordnet. Die Sensoren 24, 30 sind zu einem Sensieren eines Betriebsparameters und/oder eines Umgebungsparameters vorgesehen. Alternativ oder zusätzlich können die Sensoren 24, 30 dazu vorgesehen sein, mehrere Umgebungsparameter und/oder Betriebsparameter und/oder weitere Parameter zu sensieren. Eine Sensoraktivierung ist in Abhängigkeit der Schwarminformationen gesteuert. Eine Sensornutzung ist in Abhängigkeit der Schwarminformationen gesteuert.

Ein Kommunikationsmodul 50 ist jeweils einem Gegenstand 10 zugeordnet. Das Kommunikationsmodul 50 weist einen Sender 64 und einen Empfänger 66 auf. Der Sender 64 ist zu einem Aussenden von Daten des Gegenstands 10 und/oder des Sensors 24, 30 vorgesehen. Der Empfänger 66 ist zu einem Empfangen von Befehlen für den Gegenstand 10 und/oder den Sensor 24, 30 vorgesehen. Die Kommunikation mittels der Kommunikationseinheit 12 erfolgt drahtlos.

Die Gegenstände 10 weisen jeweils ein Rechenmodul 26 auf. Das Rechenmodul 26 ist dazu vorgesehen, Sensordaten der Sensoren 24, 30 auszulesen, aufzubereiten und zu einem Versenden an das Kommunikationsmodul 50 weiterzuleiten. Das Rechenmodul 26 ist dazu vorgesehen, mittels des Empfängers 66 des Kommunikationsmoduls 50 empfangene Befehle an den Gegenstand 10 und/oder an den Sensor 24, 30 weiterzuleiten bzw. ein Umsetzen der Befehle zu veranlassen.

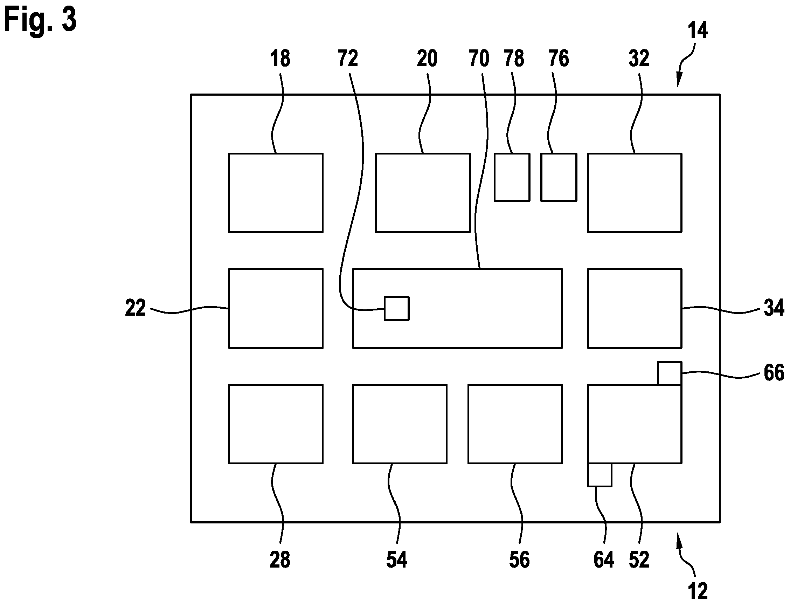

Die Vorrichtung weist eine Recheneinheit 14 auf. Die Recheneinheit 14 bildet eine Cloud aus. Alternativ kann die Recheneinheit 14 ein zentrales Datenverarbeitungssystem umfassen und/oder zumindest teilweise von einem zentralen Datenverarbeitungssystem ausgebildet sein. In Fig. 3 ist ein Teil der Recheneinheit 14 gesondert dargestellt. Die Recheneinheit 14 ist teilweise einstückig mit der Kommunikationseinheit 12 ausgebildet. Die Recheneinheit 14 ist zur Verarbeitung von mittels der Kommunikationseinheit 12 empfangenen elektronischen Daten vorgesehen. Die Recheneinheit 14 ist dazu vorgesehen, in Abhängigkeit der Schwarminformationen eines Gegenstände 10 umfassenden Schwarms 16, 16` Befehle an zumindest einen der Gegenstände 10 des Schwarms 16, 16' auszugeben. Ein durch die Recheneinheit 14 ausgegebener Befehl ist dazu vorgesehen, eine Einzelfunktion eines der Gegenstände 10 zu aktivieren. Ein durch die Recheneinheit 14 ausgegebener weiterer Befehl ist dazu vorgesehen, eine Einzelfunktion eines der Gegenstände 10 zu aktivieren.

Die Recheneinheit 14 ist dazu vorgesehen, in Abhängigkeit der Schwarminformationen eines Gegenstände 10 umfassenden Schwarms 16, 16' Informationen an zumindest einen Bediener 68 eines der Gegenstände 10 des Schwarms 16, 16' auszugeben. Die Recheneinheit 14 weist ein zentrales Rechenmodul 70 auf. Das zentrale Rechenmodul 70 ist dazu vorgesehen, Rechenkapazitäten für die Recheneinheit 14 bereitzustellen. Das zentrale Rechenmodul 70 ist dazu vorgesehen, Rechenkapazitäten der Recheneinheit 14 sowie von Modulen der Recheneinheit 14 zu verwalten. Das zentrale Rechenmodul 70 weist ein zentrales Speichermodul 72 auf. Das zentrale Speichermodul 72 umfasst einen physikalischen Speicher. Das zentrale Speichermodul 72 ist dazu vorgesehen, Daten von Gegenständen 10, Sensoren 24, 30 und/oder Betriebsprogrammen der Recheneinheit 14 abzuspeichern.

Die Recheneinheit 14 ist zumindest zeitabschnittsweise um ein Rechenmodul 26 eines Gegenstands 10 des Schwarms 16, 16' oder um eine Mehrzahl von Rechenmodulen 26 einer Mehrzahl von Gegenständen 10 des Schwarms 16, 16' erweitert. Die Rechenkapazitäten der Rechenmodule 26 und des zentralen Rechenmoduls 70 sind bei einer Erweiterung der Recheneinheit 14 kombiniert. Eine Rechenleistungsverteilung anstehender Berechnungsaufgaben der Recheneinheit 14 ist bei einer erweiterten Recheneinheit 14 auf die erweiterten Rechenmodule 26 und das zentrale Rechenmodul 70 der Recheneinheit 14 in Abhängigkeit der Schwarminformationen gesteuert. Die Rechenleistungsverteilung der erweiterten Recheneinheit 14 ist dynamisch steuerbar.

Die Recheneinheit 14 ist dazu vorgesehen, anhand der Schwarminformationen einen Sensor 24, 30 des Schwarms 16, 16' zu kalibrieren. Die Recheneinheit 14 weist ein Kalibrationsmodul 76 auf. Die Recheneinheit 14 weist ein Diskriminationsmodul 54 auf. Zu einer Kalibration eines Sensors 24 mittels des Kalibrationsmoduls 76 anhand der Schwarminformationen gleicht das Kalibrationsmodul 76 die Sensordaten des Sensors 24 mit Sensordaten weiterer Sensoren 30 ab. Mittels des Diskriminationsmoduls 54 ermittelt die Recheneinheit 14 für eine Kalibration eines Sensors 24 geeignete weitere Sensoren 30. Dazu vergleicht das Diskriminationsmodul 54 eine räumliche Position der Sensoren 24, 30 und/oder greift auf Schwarminformationen zurück. Anhand der Sensordaten der weiteren Sensoren 30 erstellt das Kalibrationsmodul 76 eine Kalibrationskurve. Mittels der Kalibrationskurve erfolgt eine automatische Kalibration und/oder Anpassung der Ausgabe des Sensors 24. Die Recheneinheit 14 ist dazu vorgesehen, anhand der Schwarminformationen eine Kalibrationsanweisung an einen Bediener 68 eines dem Schwarm 16, 16' zugehörigen Gegenstands 10 auszugeben. Die Kalibrationsanweisung wird dabei abhängig von Sensordaten des Sensors 24, 30, beispielsweise wenn diese Auffälligkeiten zeigen, und/oder abhängig von einer seit einer letzten Kalibration vergangenen Zeitspanne erstellt. Vorteilhaft kann das Anzeigeelement 74 dazu vorgesehen sein, mittels einer Anzeige und/oder eines Lichtsignals eine Kalibrationsanweisung an den Bediener 68 zu übermitteln. Alternativ kann mittels der Kommunikationseinheit 12 eine Kalibrationsanweisung in Form einer Nachricht an einen Bediener 68 übermittelt werden.

Die Kommunikationseinheit 12 weist ein zentrales Kommunikationsmodul 52 auf. Die Recheneinheit 14 weist das zentrale Kommunikationsmodul 52 auf. Das zentrale Kommunikationsmodul 52 ist dem zentralen Rechenmodul 70 zugeordnet. Das zentrale Kommunikationsmodul 52 ist zur Koordination der Kommunikation der Kommunikationseinheit 12 vorgesehen. Das zentrale Kommunikationsmodul 52 ist zur Koordination der Kommunikation mit den Kommunikationsmodulen 50 der Gegenstände 10 vorgesehen. Das zentrale Kommunikationsmodul 52 weist einen Sender 64 und einen Empfänger 66 auf. Das zentrale Kommunikationsmodul 52 ist dazu vorgesehen, Befehle der Recheneinheit 14 an die Gegenstände 10 zu übermitteln. Die Kommunikationseinheit 12 weist ein Verschlüsselungsmodul 34 auf. Das Verschlüsselungsmodul 34 ist dazu vorgesehen, eine Datenkommunikation innerhalb des Schwarms 16, 16' zu verschlüsseln und/oder zu entschlüsseln. Jedem Kommunikationsmodul 50, 52 ist ein Verschlüsselungsmodul 34 zugeordnet. Das Kommunikationsmodul 50 ist teilweise einstückig mit dem Verschlüsselungsmodul 34 ausgebildet (vgl. auch Fig. 2).

Die Recheneinheit 14 weist ein Schwarmbildungsmodul 18 auf. Das Schwarmbildungsmodul 18 ist dazu vorgesehen, einem Schwarm 16, 16` Gegenstände 10 aufgrund der durch das zentrale Kommunikationsmodul 52 empfangenen elektronischen Daten zuzuweisen. Das Schwarmbildungsmodul 18 ist dazu vorgesehen, Gegenstände 10 aufgrund der durch das zentrale Kommunikationsmodul 52 empfangenen elektronischen Daten aus dem Schwarm 16, 16' zu entfernen. Das Schwarmbildungsmodul 18 speichert in dem zentralen Speichermodul 72 eine Tabelle ab, welche die Gegenstände 10 eines Schwarms 16, 16' umfasst. Bei einem Hinzufügen und/oder Entfernen eines Gegenstands 10 manipuliert das Schwarmbildungsmodul 18 die abgespeicherte Tabelle. Ein Hinzufügen und/oder Entfernen eines Gegenstands 10 erfolgt auf einen an das Schwarmbildungsmodul 18 übertragenen Befehl, beispielsweise durch eine externe Bedienervorgabe, oder durch einen internen Abgleich mit einer weiteren in dem zentralen Speichermodul 72 gespeicherten Tabelle, welche eine Liste für einen Schwarm 16, 16' vorgesehener Gegenstände 10 beinhaltet. Das Verschlüsselungsmodul 34 ist dazu vorgesehen, eine Datenkommunikation mit der Recheneinheit 14 zu verschlüsseln und/oder zu entschlüsseln.

Die Recheneinheit 14 weist ein Energieüberwachungsmodul 20 auf. Das Energieüberwachungsmodul 20 ist dazu vorgesehen, einen durch die Recheneinheit 14 ausgegebenen Befehl in Abhängigkeit von einem Energiezustand des Schwarms 16, 16' und/oder von einem Energiezustand eines Gegenstands 10 des Schwarms 16, 16' vor einer Ausgabe durch die Recheneinheit 14 zu modifizieren und/oder zu blockieren. Dazu findet insbesondere vor einer Ausgabe eines Befehls durch das Energieüberwachungsmodul 20 ein Abgleich mit in dem zentralen Speichermodul 72 abgespeicherten Energiezuständen von Gegenständen 10 statt. Bei einer Erkennung eines niedrigen Energiezustands eines Gegenstands 10 modifiziert das Energieüberwachungsmodul 20 Befehle an den Gegenstand 10 mit dem Ziel, einen durch die Ausführung des Befehls verursachten Energieverbrauch niedrig zu halten. Alternativ reduziert das Energieüberwachungsmodul 20 eine Häufigkeit eines Aussendens von Befehlen an den Gegenstand 10 oder blockiert das Aussenden von Befehlen an den Gegenstand 10 komplett.

Die Recheneinheit 14 weist ein Schwarmüberprüfungsmodul 22 auf. Das Schwarmüberprüfungsmodul 22 ist dazu vorgesehen, den Schwarm 16, 16' auf Vollständigkeit hin zu überprüfen. Dazu gleicht das Schwarmüberprüfungsmodul 22 auf Basis empfangener Identifikatoren von Gegenständen 10 die aktuell dem Schwarm 16, 16' zugehörigen Gegenstände 10 mit einer in dem zentralen Speichermodul 72 gespeicherten Tabelle von Gegenständen 10 ab, wobei die Tabelle eine Vorgabe für dem Schwarm 16, 16' notwendigerweise zugehörige Gegenstände 10 enthält. Alternativ oder zusätzlich kann das Schwarmüberprüfungsmodul 22 dazu vorgesehen sein, einen Vergleich eines Inhalts eines Schwarms 16, 16' zu einem Zeitpunkt mit einem Inhalt desselben Schwarms 16, 16' zu einem vorangegangenen Zeitpunkt durchzuführen. Wenn das Schwarmüberprüfungsmodul 22 ein Fehlen eines Gegenstands 10 feststellt, veranlasst das Schwarmüberprüfungsmodul 22 eine Benachrichtigung eines Bedieners 68 und/oder eines Administrators der Vorrichtung. Alternativ oder zusätzlich kann das Schwarmüberprüfungsmodul 22 bei einem Fehlen eines Gegenstands 10 mittels eines über die Kommunikationseinheit 12 versandten Signals nach passenden Gegenständen 10 suchen und bei entsprechender positiver Rückmeldung mittels des Schwarmbildungsmoduls 18 fehlende Gegenstände 10 dem Schwarm 16, 16' hinzufügen.

Die Recheneinheit 14 weist ein Wartungsmodul 78 auf. Das Wartungsmodul 78 ist dazu vorgesehen, einen Servicezustand eines Rechenmoduls 26 des Schwarms 16, 16' zu überprüfen. Das Wartungsmodul 78 ist dazu vorgesehen, falls ein Servicezustand es erfordert, einen Wartungsschritt des Rechenmoduls 26 einzuleiten. In dem Wartungsschritt aktualisiert das Wartungsmodul 78 eine auf dem Rechenmodul 26 installierte Firmware. Das Wartungsmodul 78 ist dazu vorgesehen, einen Servicezustand eines Gegenstands 10 des Schwarms 16, 16' zu überprüfen. Das Wartungsmodul 78 ist dazu vorgesehen, falls ein Servicezustand es erfordert, einen Wartungsschritt des Gegenstands 10 einzuleiten. In dem Wartungsschritt des Gegenstands 10 sendet das Wartungsmodul 78 eine Wartungsaufforderung, beispielsweise zu einem Austausch eines Verschleißteils, an einen Bediener 68. Das Wartungsmodul 78 ist dazu vorgesehen, Wartungsschritte mehrerer Gegenstände 10, Sensoren 24, 30 und/oder Rechenmodule 26 zu synchronisieren.

Die Recheneinheit 14 weist ein Plausibilitätsmodul 28 auf. Das Plausibilitätsmodul 28 ist dazu vorgesehen, in Abhängigkeit der Schwarminformationen Sensordaten eines Sensors 24 des Schwarms 16, 16' mittels einer Ansteuerung und/oder eines Auslesens eines geeigneten weiteren Sensors 30 des Schwarms 16, 16' auf Plausibilität zu untersuchen. Das Plausibilitätsmodul 28 bestätigt eine Plausibilität positiv, wenn die Sensordaten des Sensors 24 und des weiteren Sensors 30 zumindest im Wesentlichen übereinstimmen. Bei einer signifikanten Abweichung der Sensordaten des Sensors 24 und des Weiteren Sensors 30 voneinander gleicht das Plausibilitätsmodul 28 die Sensordaten des Sensors 24 und des weiteren Sensors 30, wenn möglich, mit einem zusätzlichen weiteren Sensor (nicht gezeigt) eines Gegenstands 10 ab, welcher in einem Nahbereich des Sensors 24 und des weiteren Sensors 30 verordnet ist und dazu in der Lage ist, einen übereinstimmenden Parameter zu sensieren. Bei einer Übereinstimmung von Sensordaten zweier Sensoren 24, 30 und einer Abweichung der Sensordaten des dritten Sensors 24, 30 markiert das Plausibilitätsmodul 28 den abweichenden Sensor 24, 30 als fehlerhaft und initiiert eine Benachrichtigung eines Bedieners 68, eine Kalibration des abweichenden Sensors 24, 30 mittels des Kalibrationsmoduls 76 und/oder eine Wartung des abweichenden Sensors 24, 30 mittels des Wartungsmoduls 78. Bei einer signifikanten Abweichung der Sensordaten dreier Sensoren 24, 30 voneinander initiiert das Plausibilitätsmodul 28 eine Benachrichtigung eines Bedieners 68 mittels der Kommunikationseinheit 12.

Die Recheneinheit 14 weist ein Ereigniserkennungsmodul 32 auf. Das Ereigniserkennungsmodul 32 ist dazu vorgesehen, anhand der Schwarminformationen ein Ereignis zu erkennen, welches zumindest einen Teil des Schwarms 16, 16' betrifft. Die Schwarminformationen bestehen aus gesammelten Sensordaten der Sensoren 24, 30 des Schwarms 16, 16'. Das Ereigniserkennungsmodul 32 analysiert die Schwarminformationen mittels einer Musterkennung. Dazu gleicht das Ereigniserkennungsmodul 32 Muster in den Schwarminformationen mit bekannten Mustern ab und initiiert bei einer Übereinstimmung eine Reaktion. Bekannte Muster können beispielsweise Muster sein, welche in dem zentralen Speichermodul 72 abgespeichert sind und auf welche das Ereigniserkennungsmodul 32 Zugriff hat. Alternativ oder zusätzlich kann das Ereigniserkennungsmodul 32 dazu vorgesehen sein, selbstständig Muster zu erkennen, wobei die selbstständige Mustererkennung insbesondere durch selbstlernende Algorithmen unterstützt sein kann. Dadurch kann vorteilhaft eine stetige Verbesserung und/oder Optimierung der Mustererkennung und/oder der auf eine Erkennung eines Musters folgenden Reaktion des Ereigniserkennungsmoduls 32 ermöglicht werden. Die Erkennung eines Ereignisses durch das Ereigniserkennungsmodul 32 basiert beispielsweise auf einer Bewegung zumindest eines Teils des Schwarms 16, 16' und/oder auf einer Temperaturverteilung an verschiedenen Orten innerhalb des Schwarms 16, 16'.

Die Recheneinheit 14 weist ein Zugriffsberechtigungsmodul 56 auf. Das Zugriffsberechtigungsmodul 56 ist dazu vorgesehen, eine Zugriffsberechtigung eines Bedieners 68 auf einen Gegenstand 10 des Schwarms 16, 16' zu regeln. Das Zugriffsberechtigungsmodul 56 gleicht eine Identität eines Bedieners 68 mit einem in dem zentralen Speichermodul 72 abgespeicherten Berechtigungsmanagement ab. Das Berechtigungsmanagement ist als eine Tabelle ausgebildet, welche jeden registrierten Bediener 68 mit bestimmten Gegenständen 10 des Schwarms 16, 16' verknüpft.

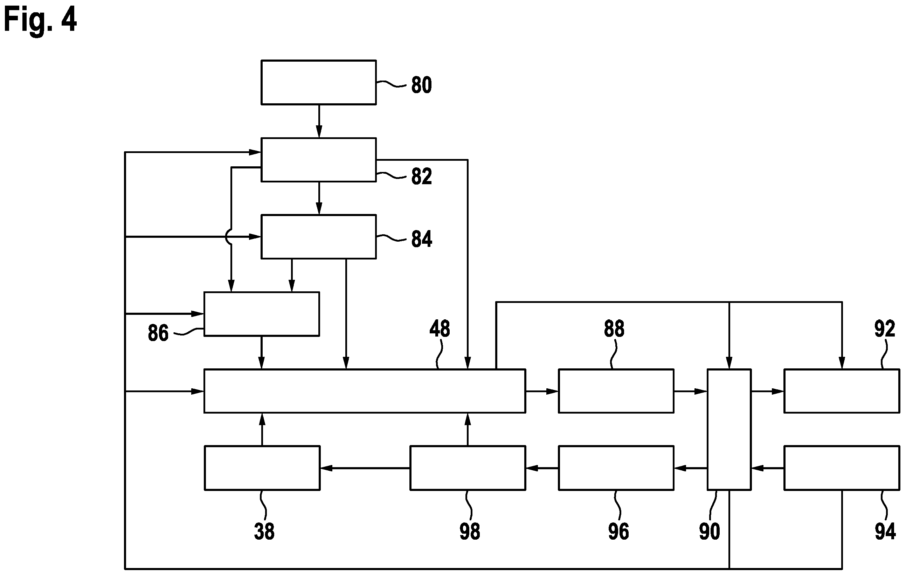

Fig. 4 zeigt ein Ablaufdiagramm eines Verfahrens zur Überwachung und/oder zur Verwaltung einer Vielzahl von Gegenständen 10. In zumindest einem Verfahrensschritt 80 wird mit Hilfe des Schwarmbildungsmoduls 18 ein Schwarm 16, 16' gebildet. Dazu werden Gegenstände 10 gruppiert und durch gegenseitige Kommunikation vernetzt. In zumindest einem Verfahrensschritt 82 wird der Schwarm 16, 16' von dem Schwarmüberprüfungsmodul 22 überprüft. Dazu wird ein Ist-Inventar von innerhalb des Schwarms 16, 16' vernetzten Gegenständen 10 mit einem Soll-Inventar des Schwarms 16, 16', welches in dem zentralen Speichermodul 72 hinterlegt ist, abgeglichen. In zumindest einem Verfahrensschritt 84 wird die Rechenkapazität der Recheneinheit 14 des Schwarms 16, 16' um die Rechenkapazität eines Rechenmoduls 26 eines Gegenstand 10 erweitert. Die Erweiterung der Rechenkapazität und die Verteilung der mittels der Rechenkapazität zu bewältigenden Berechnungsaufgaben wird durch die Recheneinheit 14 dynamisch gesteuert. In zumindest einem Verfahrensschritt 94 werden Daten und/oder Sensordaten von den Gegenständen 10 und/oder den Sensoren 24, 30 versendet und von dem zentralen Kommunikationsmodul 52 der Kommunikationseinheit 12 empfangen. In zumindest einem Verfahrensschritt 90 werden von der Kommunikationseinheit 12 empfangene Daten durch das Verschlüsselungsmodul 34 entschlüsselt und/oder mittels der Kommunikationseinheit 12 zu versendende Daten durch das Verschlüsselungsmodul 34 entschlüsselt. In zumindest einem Verfahrensschritt 96 werden mittels der Kommunikationseinheit 12 empfangene Sensordaten von dem Plausibilitätsmodul 28 auf Plausibilität hin überprüft. In zumindest einem Verfahrensschritt 98 wird von dem Kalibrationsmodul 76 ein Sensor 24, 30 neu kalibriert. In zumindest einem Verfahrensschritt 38 werden von dem Diskriminationsmodul 54 geeignete Sensoren 24, 30 für eine Kalibration eines weiteren Sensors 24, 30 bestimmt. In zumindest einem Verfahrensschritt 86 wird von dem Ereigniserkennungsmodul 32 anhand der durch die Kommunikationseinheit 12 empfangenen Daten ein Ereignis erkannt. Dazu wird von dem Ereigniserkennungsmodul 32 eine Mustererkennung anhand der empfangenen Daten durchgeführt. In zumindest einem Verfahrensschritt 48 werden in Abhängigkeit der Schwarminformationen der Gegenstände 10 des Schwarms 16, 16' Befehle an einen der Gegenstände 10 des Schwarms 16, 16' und/oder Informationen an einen Bediener 68 eines der Gegenstände 10 des Schwarms 16, 16' ausgegeben. In zumindest einem Verfahrensschritt 88 werden von dem Energieüberwachungsmodul 20 die Befehle der Recheneinheit 14 in Abhängigkeit von dem Energiezustand des Schwarms 16, 16' und/oder dem Energiezustand eines Gegenstands 10 des Schwarms 16, 16' vor einer Ausgabe durch die Recheneinheit 14 modifiziert und/oder blockiert. In zumindest einem Verfahrensschritt 92 werden Befehle mittels der Kommunikationseinheit 12 an Gegenstände 10 und/oder Sensoren 24, 30 versendet.

## Patentansprüche

1. Verwaltungsvorrichtung zur Überwachung und/oder zur Verwaltung einer Vielzahl von Handwerkzeugmaschinen und/oder Zubehör für Handwerkzeugmaschinen umfassenden Gegenständen (10), mit einer Kommunikationseinheit (12) zur Kommunikation mit den Gegenständen (10) und mit einer Recheneinheit (14) zur Verarbeitung von mittels der Kommunikationseinheit (12) empfangenen elektronischen Daten, wobei die Recheneinheit (14) in Abhängigkeit von Schwarminformationen eines Schwarms (16, 16'), der die Gegenstände (10) umfasst, Befehle an zumindest einen der Gegenstände (10) des Schwarms (16, 16') ausgibt, **dadurch gekennzeichnet, dass** die Recheneinheit (14) ein Energieüberwachungsmodul (20) aufweist, welches dazu vorgesehen ist, zumindest einen der Befehle in Abhängigkeit von einem Energiezustand des Schwarms (16, 16') und/oder einem Energiezustand zumindest eines Gegenstands (10) des Schwarms (16, 16') vor einer Ausgabe durch die Recheneinheit (14) derart zu modifizieren, dass bei einem Empfang durch die Kommunikationseinheit (12) des zumindest einen Gegenstands (10) ein Energiesparmodus und/oder ein Betrieb mit reduziertem Energieverbrauch einer bestimmten Funktion des zumindest einen Gegenstands (10) angesteuert wird und/oder ein zeitlicher Abstand von aufeinanderfolgenden, an den zumindest einen Gegenstand (10) gerichteten Befehlen abhängig von dem Energiezustand beeinflusst wird und/oder bei einem Vorhandensein mehrerer Gegenstände (10) eine Ansteuerung der Gegenstände (10) des Schwarms (16, 16') bevorzugt wird, welche den höchsten Ladezustand aufweisen.

2. Verwaltungsvorrichtung nach Anspruch 1, **dadurch gekennzeichnet, dass** die Recheneinheit (14) ein Schwarmbildungsmodul (18) aufweist, welches dazu vorgesehen ist, dem Schwarm (16, 16') Gegenstände (10) aufgrund der empfangenen elektronischen Daten zuzuweisen und/oder aus dem Schwarm (16, 16') zu entfernen.

3. Verwaltungsvorrichtung nach Anspruch 1 oder 2, **dadurch gekennzeichnet, dass** zumindest einer der durch die Recheneinheit (14) ausgegebenen Befehle dazu vorgesehen ist, eine Einzelfunktion zumindest eines der Gegenstände (10) zu aktivieren und/oder zu blockieren.

4. Verwaltungsvorrichtung nach einem der vorhergehenden Ansprüche, **dadurch gekennzeichnet, dass** die Recheneinheit (14) ein Schwarmüberprüfungsmodul (22) aufweist, welches dazu vorgesehen ist, den Schwarm (16, 16') auf Vollständigkeit zu überprüfen.

5. Verwaltungsvorrichtung nach einem der vorhergehenden Ansprüche, **dadurch gekennzeichnet, dass** der Schwarm (16, 16') eine Vielzahl an Sensoren (24) aufweist, wobei die Recheneinheit (14) dazu vorgesehen ist, anhand der Schwarminformationen einen Sensor (24) des Schwarms (16, 16') zu kalibrieren und/oder eine Kalibrationsanweisung an einen Bediener (68) zumindest eines dem Schwarm (16, 16') zugehörigen Gegenstands (10) auszugeben.

6. Verwaltungsvorrichtung nach einem der vorhergehenden Ansprüche, **dadurch gekennzeichnet, dass** die Recheneinheit (14) zumindest zeitabschnittsweise um ein Rechenmodul (26), welches zumindest einem Gegenstand (10) des Schwarms (16, 16') zugeordnet ist, erweitert ist.

7. Verwaltungsvorrichtung nach Anspruch 6, **dadurch gekennzeichnet, dass** eine Rechenleistungsverteilung auf Rechenmodule (26, 70) der Recheneinheit (14) in Abhängigkeit der Schwarminformationen gesteuert ist.

8. Verwaltungsvorrichtung nach einem der vorhergehenden Ansprüche, **dadurch gekennzeichnet, dass** die Recheneinheit (14) zumindest ein Wartungsmodul (78) aufweist, welches dazu vorgesehen ist, zumindest einen Servicezustand zumindest eines Rechenmoduls (26) des Schwarms (16, 16') und/oder zumindest eines Gegenstands (10) des Schwarms (16, 16') zu überprüfen und in Abhängigkeit des Servicezustands einen Wartungsschritt einzuleiten.

9. Verwaltungsvorrichtung nach einem der vorhergehenden Ansprüche, **dadurch gekennzeichnet, dass** der Schwarm (16, 16') eine Vielzahl an Sensoren (24) aufweist, wobei eine Sensoraktivierung und/oder eine Sensornutzung in Abhängigkeit der Schwarminformationen gesteuert ist.

10. Verwaltungsvorrichtung nach einem der vorhergehenden Ansprüche, **dadurch gekennzeichnet, dass** der Schwarm (16, 16') eine Vielzahl an Sensoren (24) aufweist, wobei die Recheneinheit (14) ein Plausibilitätsmodul (28) aufweist, welches dazu vorgesehen ist, in Abhängigkeit der Schwarminformationen Sensordaten eines Sensors (24) des Schwarms (16, 16') mittels einer Ansteuerung und/oder eines Auslesens eines geeigneten weiteren Sensors (30) des Schwarms (16, 16') auf Plausibilität zu untersuchen.

11. Verwaltungsvorrichtung nach einem der vorhergehenden Ansprüche, **dadurch gekennzeichnet, dass** die Recheneinheit (14) ein Ereigniserkennungsmodul (32) umfasst, welches dazu vorgesehen ist, anhand der Schwarminformationen ein Ereignis zu erkennen, welches zumindest einen Teil des Schwarms (16, 16') betrifft.

12. Verwaltungsvorrichtung nach Anspruch 11, **dadurch gekennzeichnet, dass** die Erkennung des Ereignisses auf einer Bewegung zumindest eines Teils des Schwarms (16, 16') basiert.

13. Verwaltungsvorrichtung nach Anspruch 11 oder 12, **dadurch gekennzeichnet, dass** die Erkennung des Ereignisses auf einer Temperaturverteilung an verschiedenen Orten innerhalb des Schwarms (16, 16') basiert.

14. Verwaltungsvorrichtung nach einem der vorhergehenden Ansprüche, **dadurch gekennzeichnet, dass** die Kommunikationseinheit (12) ein Verschlüsselungsmodul (34) aufweist, welches dazu vorgesehen ist eine Datenkommunikation innerhalb des Schwarms (16, 16') und/oder mit der Recheneinheit (14) zu verschlüsseln und/oder zu entschlüsseln.

15. System (36) umfassend eine Verwaltungsvorrichtung zur Überwachung und/oder zur Verwaltung einer Vielzahl von Handwerkzeugmaschinen und/oder Zubehör für Handwerkzeugmaschinen umfassenden Gegenständen (10) nach einem der vorhergehenden Ansprüche und mit einem durch eine Vielzahl von Gegenständen (10) ausgebildeten Schwarm (16, 16').

16. System (36) nach Anspruch 15, weiterhin umfassend eine Zugriffskontrolleinheit (40).

17. System (36) nach Anspruch 16, **dadurch gekennzeichnet, dass** die Zugriffskontrolleinheit (40) dazu vorgesehen ist, in Abhängigkeit von einer Zugriffsberechtigung eines Bedieners (68), welcher Zugriff auf zumindest einen Teil des Schwarms (16, 16') erlangen möchte und/oder in Abhängigkeit von zumindest einer Schwarminformation eine Funktion zumindest eines Teils des Schwarms (16, 16') freizuschalten und/oder zu blockieren.

18. System (36) nach Anspruch 17, **dadurch gekennzeichnet, dass** die Zugriffskontrolleinheit (40) zumindest eine Kamera (42) und/oder zumindest einen Bewegungsmelder (44) umfasst.

19. Verwaltungsverfahren zur Überwachung und/oder zur Verwaltung einer Vielzahl von Handwerkzeugmaschinen und/oder Zubehör für Handwerkzeugmaschinen umfassenden Gegenständen (10), welche zumindest einen Schwarm (16, 16') ausbilden, wobei in einem Verfahrensschritt (48) in Abhängigkeit der Schwarminformationen der Gegenstände (10) des Schwarms (16, 16') Befehle an zumindest einen der Gegenstände (10) des Schwarms (16, 16') ausgegeben werden, **dadurch gekennzeichnet, dass** zumindest einer der Befehle in Abhängigkeit von einem Energiezustand des Schwarms (16, 16') und/oder einem Energiezustand zumindest eines Gegenstands (10) des Schwarms (16, 16') vor einer Ausgabe durch eine Recheneinheit (14) derart modifiziert wird, dass bei einem Empfang durch eine Kommunikationseinheit (12) des zumindest einen Gegenstands (10) ein Energiesparmodus und/oder ein Betrieb mit reduziertem Energieverbrauch einer bestimmten Funktion des zumindest einen Gegenstands (10) angesteuert wird und/oder ein zeitlicher Abstand von aufeinanderfolgenden, an den zumindest einen Gegenstand (10) gerichteten Befehlen abhängig von dem Energiezustand beeinflusst wird und/oder bei einem Vorhandensein mehrerer Gegenstände (10) eine Ansteuerung der Gegenstände (10) des Schwarms (16, 16') bevorzugt wird, welche den höchsten Ladezustand aufweisen.

## Claims

1. Management device for monitoring and/or managing a multiplicity of objects (10) including hand-held power tools and/or accessories for hand-held power tools, having a communication unit (12) for communicating with the objects (10) and having a computing unit (14) for processing electronic data received by means of the communication unit (12), wherein the computing unit (14), depending on swarm information of a swarm (16, 16') which comprises the objects, outputs commands to at least one of the objects (10) of the swarm (16, 16'), **characterized in that** the computing unit (14) has an energy-monitoring module (20) which is provided to modify at least one of the commands depending on an energy state of the swarm (16, 16') and/or an energy state of at least one object (10) of the swarm (16, 16') prior to an output by the computing unit (14), **in that**, upon reception by the communication unit (12) of the at least one object (10), an energy-saving mode and/or operation with a reduced energy consumption of a specific function of the at least one object (10) is controlled and/or a time interval between consecutive commands addressed to the at least one object (10) is influenced depending on the energy state and/or, if a plurality of objects (10) are present, a control of the objects (10) of the swarm (16, 16') which have the highest state of charge is preferred.

2. Management device according to Claim 1, **characterized in that** the computing unit (14) has a swarm-forming module (18) which is provided to assign objects (10) to the swarm (16, 16') and/or to remove objects (10) from the swarm (16, 16') on the basis of the received electronic data.

3. Management device according to Claim 1 or 2, **characterized in that** at least one of the commands output by the computing unit (14) is provided to activate and/or block a single function of at least one of the objects (10) .

4. Management device according to one of the preceding claims, **characterized in that** the computing unit (14) has a swarm-checking module (22) which is provided to check the swarm (16, 16') for completeness.

5. Management device according to one of the preceding claims, **characterized in that** the swarm (16, 16') has a multiplicity of sensors (24), wherein the computing unit (14) is provided to calibrate a sensor (24) of the swarm (16, 16') and/or to output a calibration instruction to an operator (68) of at least one object (10) belonging to the swarm (16, 16') on the basis of the swarm information.

6. Management device according to one of the preceding claims, **characterized in that** the computing unit (14) is extended, at least in time segments, by a computing module (26) which is assigned to at least one object (10) of the swarm (16, 16').

7. Management device according to Claim 6, **characterized in that** a computing power distribution among computing modules (26, 70) of the computing unit (14) is controlled depending on the swarm information.

8. Management device according to one of the preceding claims, **characterized in that** the computing unit (14) has at least one maintenance module (78) which is provided to check at least one service state of at least one computing module (26) of the swarm (16, 16') and/or at least one object (10) of the swarm (16, 16'), and to initiate a maintenance step depending on the service state.

9. Management device according to one of the preceding claims, **characterized in that** the swarm (16, 16') has a multiplicity of sensors (24), wherein a sensor activation and/or a sensor use is controlled depending on the swarm information.

10. Management device according to one of the preceding claims, **characterized in that** the swarm (16, 16') has a multiplicity of sensors (24), wherein the computing unit (14) has a plausibility module (28) which is provided to investigate the plausibility of sensor data of a sensor (24) of the swarm (16, 16') by means of a control and/or readout of a suitable further sensor (30) of the swarm (16, 16') depending on the swarm information.

11. Management device according to one of the preceding claims, **characterized in that** the computing unit (14) comprises an event recognition module (32) which is provided to recognize an event which relates to at least a part of the swarm (16, 16') on the basis of the swarm information.

12. Management device according to Claim 11, **characterized in that** the recognition of the event is based on a movement of at least a part of the swarm (16, 16').

13. Management device according to Claim 11 or 12, **characterized in that** the recognition of the event is based on a temperature distribution at different locations within the swarm (16, 16').

14. Management device according to one of the preceding claims, **characterized in that** the communication unit (12) has an encryption module (34) which is provided to encrypt and/or decrypt a data communication within the swarm (16, 16') and/or with the computing unit (14).

15. System (36) comprising a management device for monitoring and/or managing a multiplicity of objects (10) including hand-held power tools and/or accessories for hand-held power tools according to one of the preceding claims and having a swarm (16, 16') formed by a multiplicity of objects (10).

16. System (36) according to Claim 15, further comprising an access control unit (40).

17. System (36) according to Claim 16, **characterized in that** the access control unit (40) is provided to enable and/or block a function of at least a part of the swarm (16, 16') depending on an access authorization of an operator (68) wishing to gain access to at least a part of the swarm (16, 16') and/or depending on at least one swarm information element.

18. System (36) according to Claim 17, **characterized in that** the access control unit (40) comprises at least one camera (42) and/or at least one motion detector (44).

19. Management method for monitoring and/or managing a multiplicity of objects (10) which include hand-held power tools and/or accessories for hand-held power tools and form at least one swarm (16, 16'), wherein, in a method step (48), commands are output to at least one of the objects (10) of the swarm (16, 16') depending on the swarm information of the objects (10) of the swarm (16, 16'), **characterized in that** at least one of the commands is modified depending on an energy state of the swarm (16, 16') and/or an energy state of at least one object (10) of the swarm (16, 16') prior to an output by a computing unit (14) in such a manner that, upon reception by a communication unit (12) of the at least one object (10), an energy-saving mode and/or operation with a reduced energy consumption of a specific function of the at least one object (10) is controlled and/or a time interval between consecutive commands addressed to the at least one object (10) is influenced depending on the energy state and/or, if a plurality of objects (10) are present, a control of the objects (10) of the swarm (16, 16') which have the highest state of charge is preferred.

## Revendications

1. Dispositif de gestion permettant de surveiller et/ou de gérer une pluralité de machines-outils portatives et/ou d'objets (10) comprenant des accessoires pour des machines-outils portatives, comprenant une unité de communication (12) pour communiquer avec les objets (10), et une unité de calcul (14) pour traiter des données électroniques reçues au moyen de l'unité de communication (12), dans lequel, en fonction des informations collectives d'un essaim (16, 16') qui comprend les objets (10), l'unité de calcul (14) émet des commandes à au moins l'un des objets (10) de l'essaim (16, 16'),
**caractérisé en ce que** l'unité de calcul (14) présente un module de surveillance d'énergie (20) qui est prévu pour modifier au moins l'une des commandes en fonction d'un état énergétique de l'essaim (16, 16') et/ou d'un état énergétique d'au moins un objet (10) de l'essaim (16, 16') avant une émission par l'unité de calcul (14) de telle sorte qu'en cas de réception par l'unité de communication (12) du au moins un objet (10), un mode d'économie d'énergie et/ou un fonctionnement à consommation d'énergie réduite d'une fonction déterminée du au moins un objet (10) sont pilotés et/ou un intervalle de temps de commandes successives, adressées audit au moins un objet (10), est influencé en fonction de l'état énergétique, et/ou en cas de présence de plusieurs objets (10), un pilotage des objets (10) de l'essaim (16, 16') qui présente l'état de charge le plus élevé est préféré.

2. Dispositif de gestion selon la revendication 1, **caractérisé en ce que** l'unité de calcul (14) présente un module de formation d'essaim (18) qui est prévu pour attribuer des objets (10) à l'essaim (16, 16') et/ou pour les retirer de l'essaim (16, 16') en raison des données électroniques reçues.

3. Dispositif de gestion selon la revendication 1 ou 2, **caractérisé en ce qu'**au moins l'une des commandes émises par l'unité de calcul (14) est prévue pour activer et/ou bloquer une fonction individuelle d'au moins l'un des objets (10).

4. Dispositif de gestion selon l'une quelconque des revendications précédentes, **caractérisé en ce que** l'unité de calcul (14) présente un module de vérification d'essaim (22) qui est prévu pour vérifier que l'essaim (16, 16') est complet.

5. Dispositif de gestion selon l'une quelconque des revendications précédentes, **caractérisé en ce que** l'essaim (16, 16') présente une pluralité de capteurs (24), dans lequel l'unité de calcul (14) est prévue pour étalonner un capteur (24) de l'essaim (16, 16') à l'aide des informations collectives et/ou pour émettre une instruction d'étalonnage à un opérateur (68) d'au moins un objet (10) appartenant à l'essaim (16, 16').

6. Dispositif de gestion selon l'une quelconque des revendications précédentes, **caractérisé en ce que** l'unité de calcul (14) est augmentée au moins par moments d'un module de calcul (26) qui est associé à au moins un objet (10) de l'essaim (16, 16').

7. Dispositif de gestion selon la revendication 6, **caractérisé en ce qu'**une répartition de puissance de calcul sur des modules de calcul (26, 70) de l'unité de calcul (14) est commandée en fonction des informations collectives.

8. Dispositif de gestion selon l'une quelconque des revendications précédentes, **caractérisé en ce que** l'unité de calcul (14) présente au moins un module de maintenance (78) qui est prévu pour vérifier au moins un état de service d'au moins un module de calcul (26) de l'essaim (16, 16') et/ou pour vérifier au moins un objet (10) de l'essaim (16, 16') et pour déclencher une étape de maintenance en fonction de l'état de service.

9. Dispositif de gestion selon l'une quelconque des revendications précédentes, **caractérisé en ce que** l'essaim (16, 16') présente une pluralité de capteurs (24), dans lequel une activation de capteur et/ou une utilisation de capteur sont commandées en fonction des informations collectives.

10. Dispositif de gestion selon l'une quelconque des revendications précédentes, **caractérisé en ce que** l'essaim (16, 16') présente une pluralité de capteurs (24), dans lequel l'unité de calcul (14) présente un module de plausibilité (28) qui est prévu pour contrôler la plausibilité des données de capteur d'un capteur (24) de l'essaim (16, 16') en fonction des informations collectives au moyen d'un pilotage et/ou d'une lecture d'un autre capteur (30) approprié de l'essaim (16, 16').

11. Dispositif de gestion selon l'une quelconque des revendications précédentes, **caractérisé en ce que** l'unité de calcul (14) comprend un module d'identification d'évènement (32) qui est prévu pour identifier à l'aide des informations collectives un évènement qui concerne au moins une partie de l'essaim (16, 16').

12. Dispositif de gestion selon la revendication 11, **caractérisé en ce que** l'identification de l'évènement est basée sur un mouvement d'au moins une partie de l'essaim (16, 16').

13. Dispositif de gestion selon la revendication 11 ou 12, **caractérisé en ce que** l'identification de l'évènement est basée sur une répartition de température à différents endroits à l'intérieur de l'essaim (16, 16').

14. Dispositif de gestion selon l'une quelconque des revendications précédentes, **caractérisé en ce que** l'unité de communication (12) présente un module de cryptage (34) qui est prévu pour crypter et/ou décrypter une communication de données à l'intérieur de l'essaim (16, 16') et/ou avec l'unité de calcul (14).

15. Système (36), comprenant un dispositif de gestion permettant de surveiller et/ou de gérer une pluralité de machines-outils portatives et/ou d'objets (10) comprenant des accessoires pour des machines-outils portatives selon l'une quelconque des revendications précédentes et un essaim (16, 16') réalisé par une pluralité d'objets (10).

16. Système (36) selon la revendication 15, comprenant en outre une unité de contrôle d'accès (40).

17. Système (36) selon la revendication 16, **caractérisé en ce que** l'unité de contrôle d'accès (40) est prévue pour libérer et/ou bloquer une fonction d'au moins une partie de l'essaim (16, 16') en fonction d'une autorisation d'accès d'un utilisateur (68) qui veut accéder à au moins une partie de l'essaim (16, 16') et/ou en fonction d'au moins une information collective.

18. Système (36) selon la revendication 17, **caractérisé en ce que** l'unité de contrôle d'accès (40) comprend au moins une caméra (42) et/ou au moins un détecteur de mouvement (44).

19. Procédé de gestion permettant de surveiller et/ou de gérer une pluralité de machines-outils portatives et/ou d'objets (10) comprenant des accessoires pour des machines-outils portatives qui réalisent au moins un essaim (16, 16'), dans lequel, dans une étape de procédé (48), des commandes sont émises à au moins l'un des objets (10) de l'essaim (16, 16') en fonction des informations collectives des objets (10) de l'essaim (16, 16'),
**caractérisé en ce qu'**au moins l'une des commandes est modifiée en fonction d'un état énergétique de l'essaim (16, 16') et/ou d'un état énergétique d'au moins un objet (10) de l'essaim (16, 16') avant une émission par l'unité de calcul (14) de telle sorte qu'en cas de réception par l'unité de communication (12) du au moins un objet (10), un mode d'économie d'énergie et/ou un fonctionnement à consommation d'énergie réduite d'une fonction déterminée du au moins un objet (10) sont pilotés et/ou un intervalle de temps de commandes successives, adressées audit au moins un objet (10), est influencé en fonction de l'état énergétique, et/ou en cas de présence de plusieurs objets (10), un pilotage des objets (10) de l'essaim (16, 16') qui présente l'état de charge le plus élevé est préféré.
